# EUROPEAN PATENT APPLICATION

(11) **EP 3 349 453 A1**
(43) Date of publication of application: **18.07.2018**
(21) Application number: 18150004.2
(22) Date of filing: 02.01.2018
(51) Int. Cl.: H04N 19/172, H04N 19/196, H04N 19/124, H04N 19/162, H04N 19/164, H04N 19/167

(54) **VIDEO ENCODING**

(30) Priority: 13.01.2017 GB 201700623
(71) Applicant: Nokia Technologies Oy, 02610 Espoo (FI)
(72) Inventor: AKSU, Emre Baris, 33800 Tampere (FI); CRICRI, Francesco, 33100 Tampere (FI); ILOLA, Lauri, 33200 Tampere (FI); HARRISON, Peter, Cambridge, CB3 0FA (GB)
(74) Representative: Nokia EPO representatives

(57) **Abstract**

This specification describes a method comprising: determining, by a neural network, a first spatial region of a video as a salient region; determining, by the neural network, at least one first encoding parameter value for the first spatial region and at least one second encoding parameter value for a second spatial region of the video; encoding the first and second spatial regions in accordance with the first and second encoding parameter values.

## Description

### Field

This specification relates generally to video encoding.

### Background

Video controllers such as MPEG-2, H.264 (AVC) and H.265 have several encoding quality and transmission channel rate adaptation techniques in order to control the transfer data rate of the encoded video data. These methods are called video rate-control algorithms in general.

### Summary

According to a first aspect, the specification describes a method comprising: determining, by a neural network, a first spatial region of a video as a salient region; determining, by the neural network, at least one first encoding parameter value for the first spatial region and at least one second encoding parameter value for a second spatial region of the video; encoding the first and second spatial regions in accordance with the first and second encoding parameter values.

The method may further comprise: determining, by the neural network, a context of the video; and determining the first and second encoding parameter values based on the determined context.

Determining the context of the video may comprise identifying a pattern or feature of the video relating to the context.

The first and second encoding parameter values may be represented in a encoding parameter matrix, wherein the encoding parameter matrix comprises two or more elements corresponding to at least the first and second encoding parameter values determined by the neural network.

The method may further comprise: receiving user feedback data associated with one or more users viewing the video having first and second spatial regions encoded in accordance with the first and second encoding parameter values, the user feedback data indicating a salient region of the video; and based on encoding information of the first and second spatial regions and the user feedback data, determining a quality score indicating the correspondence between the first spatial regions and the salient region indicated by the user feedback data.

The method may further comprise: providing the quality score to the neural network; and determining, by the neural network, the first spatial region and the first and second encoding parameter values based on the quality score.

The user feedback data may comprise data relating to at least one gaze direction from one or more users viewing the video, and the quality score may be determined based on the at least one gaze direction and the encoding information of a spatial region of the video corresponding to the at least one gaze direction.

The user feedback data may comprise at least one interaction from the one or more users indicating a salient region, and the quality score may be determined based on the at least one interaction and the encoding information of a spatial region of the video corresponding to the salient region indicated by the user.

The encoding information may be provided by the encoding parameter matrix.

The encoding information may be extracted from the video.

The method may further comprise determining the first and second encoding parameter values such that the first spatial region is encoded with a higher visual saliency than the second spatial region.

According to a second aspect, the specification describes a computer program comprising machine readable instructions that, when executed by the computing apparatuses, causes it to perform any method as described with reference to the first aspect.

According to a third aspect, the specification describes apparatus configured to perform any method as described with reference to the first aspect.

According to a fourth aspect, the specification describes an apparatus comprising: at least one processor; and at least one memory including computer program code which, when executed by the at least one processor, causes the apparatus to perform a method comprising: determining, by a neural network, a first spatial region of a video as a salient region; determining, by the neural network, at least one first encoding parameter value for the first spatial region and at least one second encoding parameter value for a second spatial region of the video; encoding the first and second spatial regions in accordance with the first and second encoding parameter values.

The computer program code, when executed, may cause the apparatus to perform: determining, by the neural network, a context of the video; and determining the first and second encoding parameter values based on the determined context.

Determining the context of the video may comprise identifying a pattern or feature of the video relating to the context.

The first and second encoding parameter values may be represented in a encoding parameter matrix, wherein the encoding parameter matrix comprises two or more elements corresponding to at least the first and second encoding parameter values determined by the neural network.

The computer program code, when executed, may cause the apparatus to perform: receiving user feedback data associated with one or more users viewing the video having first and second spatial regions encoded in accordance with the first and second encoding parameter values, the user feedback data indicating a salient region of the video; and based on encoding information of the first and second spatial regions and the user feedback data, determining a quality score indicating the correspondence between the first spatial regions and the salient region indicated by the user feedback data.

The computer program code, when executed, may cause the apparatus to perform: providing the quality score to the neural network; and determining, by the neural network, the first spatial region and the first and second encoding parameter values based on the quality score.

The user feedback data may comprise data relating to at least one gaze direction from one or more users viewing the video, and the quality score may be determined based on the at least one gaze direction and the encoding information of a spatial region of the video corresponding to the at least one gaze direction.

The user feedback data may comprise at least one interaction from the one or more users indicating a salient region, and the quality score may be determined based on the at least one interaction and the encoding information of a spatial region of the video corresponding to the salient region indicated by the user.

The encoding information may be provided by the encoding parameter matrix.

The encoding information may be extracted from the video.

The computer program code, when executed, may cause the apparatus to perform: determining the first and second encoding parameter values such that the first spatial region is encoded with a higher visual saliency than the second spatial region.

According to a fifth aspect, the specification describes a computer-readable medium having computer readable code stored thereon, the computer-readable code, when executed by at least one processor, causes performance of at least: determining, by a neural network, a first spatial region of a video as a salient region; determining, by the neural network, at least one first encoding parameter value for the first spatial region and at least one second encoding parameter value for a second spatial region of the video;
encoding the first and second spatial regions in accordance with the first and second encoding parameter values.

According to a sixth aspect, there is provided an apparatus comprising means for: determining, by a neural network, a first spatial region of a video as a salient region; determining, by the neural network, at least one first encoding parameter value for the first spatial region and at least one second encoding parameter value for a second spatial region of the video; encoding the first and second spatial regions in accordance with the first and second encoding parameter values.

### Brief Description of the Figures

Embodiments of the specification will be described with reference to the Figures, in which:
Figure 1 is a schematic illustration of a video encoding system according to embodiments of this specification;
Figure 2 is an illustration of a video including a salient region;
Figure 3 is a flow chart illustrating various operations which may be performed by a video encoding system according to embodiments of this specification;
Figure 4 is a schematic illustration of an example configuration of the video encoding system according to embodiments of this specification.

### Detailed Description of Embodiments

In the description and drawings, like reference numerals may refer to like elements throughout.

The embodiments described herein relate to a video encoding and delivery system which includes an artificial intelligence (AI) driven encoding controller (or AI controller as referred to herein) to predict salient regions in video frames based on a particular context. Encoding parameter values can be determined for salient regions of the video and for the surrounding areas in order to improve the encoded bitrate, content quality, and user experience. The salient regions can be encoded with a high visual fidelity than the surrounding regions, leading to improved visual experience for a user.

The AI controller is trained using data based on user's feedback of salient regions of a video having a first context. The AI controller can then analyse video data to determine salient regions of a video having the first context. The training data may include different contexts other than the first context, and so the AI controller may learn to distinguish between different contexts. Detection of salient regions in a video and determination of the encoding parameter values may depend on the given context of the video.

After an initial training phase, the AI controller is able to determine salient regions of a video even when feedback is not received from the user.

However, if user feedback is received, then the AI controller can continue to be trained by the user feedback in an iterative process, until the AI controller determined salient regions match the salient regions indicated by the user feedback.

The system described herein therefore provides a quality adaptive video encoding and content delivery system by introducing a context-aware artificial intelligence based controller which can learn from user behaviour and adapt the content quality and bitrate based on context and prediction of the salient regions. When the regions of interest are known, the video encoder can apply saliency region based or similar quality adaptive video encoding techniques based on the information provided by the AI controller.

The embodiments described herein may be applied to spatial videos such as for example a 360-degree virtual reality video rendered by a head-mounted display, but they are also applicable to any other types of videos, such as for example two-dimensional videos rendered on a screen. In some embodiments the video may be a three-dimensional video.

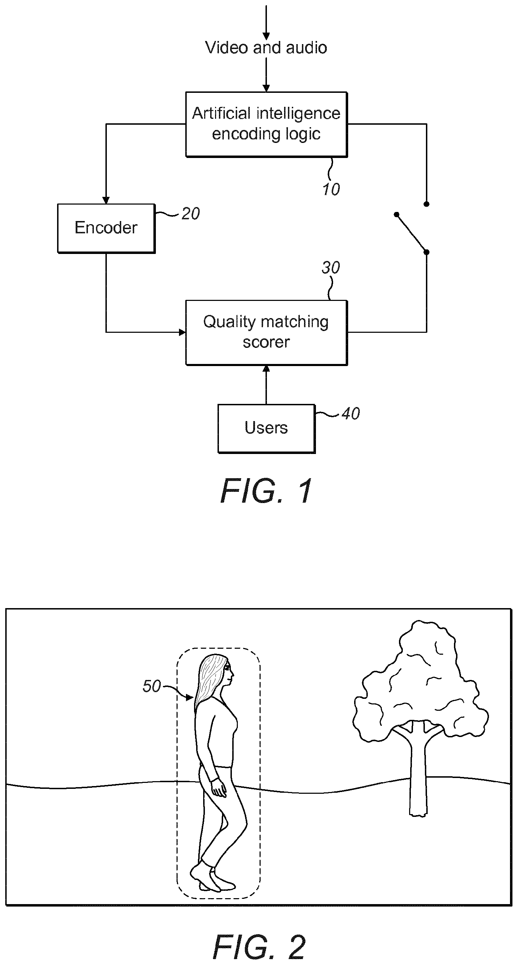

Figure 1 illustrates a schematic diagram of a video encoding system according to embodiments of the specification.

The system comprises an Artificial Intelligence Encoding Logic, or "AI controller" 10. The AI controller is configured to predict the context and salient regions of an input video frame.

Salient regions are regions of the video which may be of greater interest to a user viewing the video. For example, as shown in Figure 2, a video may comprise an actor in a scene. The salient region 50 may be considered by the user to be the region containing the actor, as the user may have a greater level of interest in the actor than in the region(s) surrounding the actor. Therefore, providing the region containing the actor in a higher quality than the surrounding regions may help to improve the user's visual experience while reducing the utilized bandwidth.

The AI controller 10 comprises a neural network. The neural network may be, for example, a Convolutional Neural Network (CNN). Such a neural network may also be augmented with additional neural layers. However, it will be understood that any suitable neural network may be used.

The neural network in the AI controller 10 predicts the salient regions based on data from users indicating salient regions in a video. Additionally, the neural network of the AI controller 10 may be configured to predict a context of the video, and to determine the salient regions based on the context of the video. Examples of a context may include, but are not limited to: a sporting related activity, a concert, etc. The context of the video may be determined according to several factors.

The neural network may undergo a training process to classify different contexts. The training process may include an unsupervised training phase followed by a supervised training phase to fine tune the results. Unsupervised training refers here to training a neural network without providing class labels as the desired results of the classification. Supervised training refers instead to the case of training a neural network by providing the class labels. In this way, the neural network may be taught to recognise and sort video scenes into a number of different classes, and a new context may be added to the system when it is not classifiable as an existing context.

If a new context is unidentified, the neural network may choose the context that best matches with an existing context based on the context pattern or features. The context patterns or features may be identified in any suitable way.

In some examples, a pattern or feature may be detected based on identification of areas in the video that tend to change the most. For example, if one specific area of the video changes more frequently than other areas, the neural network may be configured to identify one main area of interest, and to determine the size of any such area.

In other examples, a pattern or feature may be detected based on identification of one or more audio sources. The neural network may determine one or more positions or directions of the audio sources in a spatial audio scene. The neural network may determine whether the sources of audio are close together, what kind of ambient noise is present, etc. Different types of audio features may be identified. For example, the neural network may be configured to recognise repeating audio patterns and to analyse different frequency patterns. The neural network may also identify specific sound characteristics such as cheer, laughter, instantaneous audio spikes, etc.

In other examples, a pattern or feature may be detected based on dominant background information. For example, the neural network may be configured to identify that the context relates to a scene taking place on snow, grass, or dirt, etc.

In other examples, a pattern or feature may be detected based on frequently changing lighting or reflections in order to determine whether the context relates to outdoor activities, or whether the context involves artificial lighting, indicating that the context is an indoor context.

In other example, a pattern or feature may be detected based on distribution of a number of sub-patterns. For example, the neural network may be configured to identify multiple groups of dancers dancing the same dance, or multiple table tennis matches happening. It will be recognised that any kind of sub-pattern may be identified by the neural network.

The neural network may receive user feedback relating to the context of the video in a feedback loop which may provide further training for the neural network to determine a context of the video. The feedback may be received from one or more users.

The determined context may be used in the determination by the neural network of the salient regions of the video. For example, the context of the video may be determined to be a football match. The neural network may further identify the ball and players in the football match. These features may be extracted by feature extractors. The regions including the ball and players may each be determined by the neural network to be salient regions. Accordingly, the encoding parameter values for these regions may be determined such that these regions are encoded as regions of high saliency compared to any background regions, and thus assigning relatively higher quality to those regions. For example, regions including supporters and empty regions of the football field may be encoded as low saliency regions, and thus assigning relatively lower quality. Encoding parameters that may be used to adjust the quality of the salient and/or non-salient regions include, but are not limited to, a resolution, a bit-depth, a quantization parameter value, a dynamic range, a colour format, a colour gamut etc.

Accordingly, the video encoding system can adapt the content quality and bitrate based on the determined context of the video. The video encoding system can also adapt the content quality and bitrate with respect to the determined salient regions and thereby optimize the required bit rate with respect to user experience of a typical user.

The neural network may undergo a training process in order to predict the salient regions of the video. The training process uses user feedback data in order to teach the neural network to predict the salient features, which is described in more detail below. The predicted salient regions may be any shape or size.

If user feedback is not available for a video encoding system as described herein to train the neural network of the system, aggregated crowd sourced information may be obtained from other users watching the same or similar content at the same or different time and/or location. In this way, the saliency regions may be predicted based on such information.

Alternatively or additionally, the salient regions can be determined by the neural network based on corresponding spatial audio signals from spatial audio corresponding to the video. Audio signals may indicate which audio signals are likely to draw user attention in a given context. The neural network may therefore learn how to identify regions of interest of the video based on audio data corresponding to the video.

Audio may be stored with the video as a separate time-aligned track or several tracks. Audio can also be recorded as objects, which contain positional information to help players render audio from a specific angle to create a binaural effect for the listener. The positional information of such audio objects may be utilized to teach the neural network to recognise the audio signals that are frequently associated with user attention. The visual saliency may be determined based on the position of the audio signal that is recognised. This process may be more difficult with non-object based audio tracks, as the process can be more complicated and less accurate. However, approximate angles of audio may be identified which indicate interesting events in the video. For example, if an audio channel associated with a left surround channel includes an audio signal having a significantly high pitch relative to other audio signals, the neural network may be configured to determine that this high pitch indicates a potential region of interest. The identification of regions based on audio can be included in the analysis of the neural network.

The neural network 10 is configured to determine encoding parameter values for the regions of the video based on the identified salient regions. At least one first encoding parameter value is determined for the first spatial salient region 50. At least one second encoding parameter value is determined for a second spatial region, which may correspond to the remaining spatial region of the video.

Referring again to Figure 1, the system comprises an encoder 20 which receives the determined encoder parameter values output by the neural network of the AI controller 10.

The encoding parameter values output by the neural network are used by the encoder 20 to encode the video. The regions of the video are encoded according to a corresponding encoding parameter and parameter value. For example, the first spatial salient region may be encoded in accordance with the first encoding parameter value. Additionally, the second spatial region may be encoded in accordance with the second encoding parameter value.

The encoding parameters may be dependent on the type of encoder 20 used in the system. Any suitable encoder 20 may be used for the purpose of encoding the video. The neural network of the AI controller 10 may output one or more 2-dimensional arrays, or matrices, where each matrix may be called an encoding parameter matrix, having elements corresponding to the encoding parameter values determined by the neural network. The output array or matrix may have the same dimensionality as the spatial size of the video frames. Alternatively, the output array or matrix may have a lower dimensionality (for example, it may be reduced by a factor of 2). As such, the precision of the encoding parameter value will be per block of pixels rather than per pixel. An encoding parameter value may be determined for each pixel or block of pixels. The value may be dependent on whether the pixel or block of pixels is in the first spatial region or the second spatial region. The value of the encoding parameter may be different for different pixels within each region.

Multiple encoding parameter values output in an array or matrix as described above may also be referred to as encoder parameter maps ("EPMs"). The EPMs are input to the encoder 20, together with the video frames, to obtain an encoded video.

The encoder 20 may adapt a video encoding algorithm based on the encoding parameters and encoding parameter values for the first and second spatial regions provided by the AI controller 10.

The parameters may relate to region information, such as a location on the frame, and the width and height, or a mask defining a closed-region shape. The parameters may relate to at least one mid-point values of a fixed width rectangular region. The parameters may relate to a quality rank information per region or midpoint, to determine between different regions. The parameters may relate to quantization mask function information which defines how the encoding parameters are changing spatially for a given mid-point or region (for example, a sinusoid which is applied in the x and y direction and gradually converge to a constant value as the points get further away from the mid-point). However, it will be appreciated that the parameters may be any suitable parameter.

The video including the first and second regions is encoded according to the encoding parameter values, to output an encoded video.

The system may also comprise a quality matching scorer ("QMS") 30, and a user feedback module 40. During a training process of the AI controller 10, the QMS 30 analyses the encoded video, together with feedback data from users viewing the video provided via a user feedback module. The QMS module provides the training signal for training the neural network in the AI controller.

The user feedback module 40 may comprise at least one virtual reality headset including a user feedback input. The user feedback may be obtained in any suitable way.

For example, the user feedback may be obtained by making use of user gaze information with a timestamp to indicate to which temporal location of the video the gaze information corresponds. The gaze information includes information on the gaze direction of the user. The gaze direction corresponds to a region of the video at which the user is looking. The timestamp may be defined in such a way to correspond to the relevant time of the video, for example to a particular video frame. Gaze information may be collected in any suitable way. For example, gaze information may be obtained by a gaze tracking sensor. A gaze tracking sensor may form part of a virtual reality headset through which the user views the video. In some embodiments, the gaze feedback information may be received from a plurality of users or headsets. The received gaze information may comprise angular gaze information and/or gaze depth information determined for example based on detected interpupillary distance. Before inputting the received information to the quality matching scorer, the gaze information may be processed in any suitable way, for example by filtering or grouping the received gaze information from the plurality of users. The gaze information may be also processed by filtering gaze directions of the user or users over time, for example over a range of time stamps.

The user feedback may be additionally or alternatively be obtained through emotional and/or biometric data. Sensors may be used to collect such data from the physical body of the user. Any suitable sensor may be used to determine an emotional or biometric response of the user. Such sensors may include, but are not limited to: a galvanic skin response sensor, a heartrate sensor, a skin temperature sensor, etc. The feedback may include information from one of such sensors, or from a combination of any such sensors. The sensors may detect changes in the physical state of the user which may indicate increased interest during a particular event occurring in the video, which may indicate salient events. The system may then associate salient events to spatio-temporal changes in the video frames and understand the salient regions. In one embodiment, the emotional or biometric feedback can be used in combination with spatial feedback such as for example gaze information to identify salient events. For example gaze information from a group of users determined to experience a strong emotional or biometric reaction may be given a higher weight when determining the quality score in QMS 30.

In another example, the user feedback may be obtained through direct input from the user. In this case, the user may directly indicate the salient region of the video. For example, the user may touch a region on the screen which they consider to be the salient region. A user may also use virtual clues to indicate the point of interest. A virtual clue could be (but not limited to) a visual cursor controlled by peripheral devices (such as a mouse or HMD inertial measurement unit) or a handheld device where the movement of this device is projected to the visual surface being watched by the user (e.g. a hand controller and pointing device).

The feedback from the user is fed from the user feedback data module 40 to the QMS 30. The QMS 30 analyses the quality of the video in the regions and activities which correspond to the most salient regions and activities for the users from which the feedback data is collected. For example, the QMS may check whether the region around the gaze direction is high quality with respect to other regions. The QMS 30 may for example compare a value of an encoding parameter used for encoding at least part of the salient region to an encoding parameter value used outside the salient region. The QMS may do this for multiple encoding parameters and determine the final quality score based on a combination of the comparisons of the different encoding parameter values inside and outside the salient region. The QMS 30 outputs a score which represents how well the neural network of the AI controller 10 has done in the latest training iteration. The score indicates the correspondence between the first spatial regions and the salient features indicated by the user feedback data. In some embodiments, the score may be represented by a positive real number. For example, if the score is used to train the neural network by reinforcement learning, the score may represent the rewards to be maximized. In some embodiments, for example if the score is used to train the neural network by a stochastic gradient descent (SGD) method, the score may be represented by a negative real number, which may be in some embodiments obtained by multiplying the initial positive score by - 1.

The score from the QMS 30 is input back to the neural network of the AI controller 10. The score is used to train the neural network by providing feedback for the neural network to adapt. In this way, the AI controller determines encoding parameter values in response to the feedback from the users.

The QMS 30 provides a control mechanism which causes the neural network to adapt and learn the user behaviour for a particular context. However, it will be appreciated that after the training phase, user feedback data may no longer be provided to the neural network, or the feedback may be intermittent. In this case, the neural network predicts the encoding parameter values based on the latest training data.

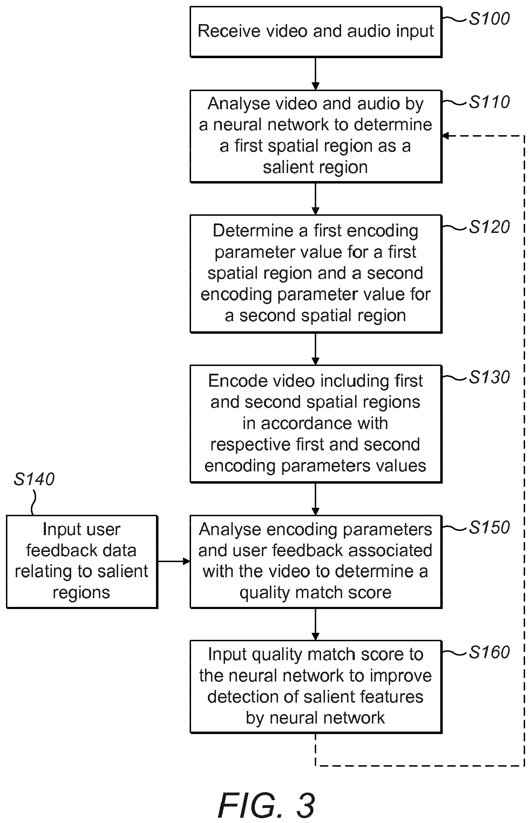

Figure 3 is a flow chart illustrating various operations which may be performed by a video encoding system. In some embodiments, not all of the illustrated operations need to be performed. Operations may also be performed in a different order compared to the order presented in Figure 3.

In operation S100, the system receives video and audio input. In some embodiments, the system may not receive audio input, but may receive only video input. The video (and audio) input may be received from any suitable source. For example, the video may be stored on a storage medium such as a DVD, Blue-Ray, hard drive, or any other suitable storage medium. Alternatively, the video may be obtained via streaming or download from an external server.

In operation S110, the video and audio are input to a neural network. The neural network analyses the video and/or audio in order to determine a first spatial region of the video as a salient region. In addition, the neural network may be configured to determine the context of the video frame, for example, based on any of the factors described above with reference to Figure 1.

The neural network may be configured to determine which spatial regions are salient regions according to training data input to the neural network. The training data may be input prior to the neural network being used in the system in an initial training phase. In some embodiments described herein, the neural network may receive user feedback data during use, after the initial training phase. This feedback data may be used to further train the neural network to detect salient features. That is, in use, the neural network may receive feedback to improve the neural network's detection of salient features. If the user feedback stops being provided to the neural network, then the neural network is able to continue to predict the salient regions based on the training performed during the training phase, and including any training based on additional user feedback during use. As described in more detail below, the user feedback may be provided to the neural network in the form of a quality match score, which may further train the neural network in detecting the context and salient regions of the video. In some embodiments the neural network may gradually increase the influence of the generated encoding parameter values to the encoded video. For example, in an initial phase the neural network may be configured to output encoding parameter matrix or matrices that cause only a small difference in quality between the salient and non-salient regions. When more feedback data has been received, for example from multiple users and after the initial training phase, the neural network is able determine the salient regions more accurately and it may be apply a greater quality difference between the salient and non-salient regions to optimize the required bit rate with respect to user experience.

The video may include a second spatial region which is not determined to be a salient region.

In operation S120, the neural network is configured to determine a first encoding parameter value for the first spatial region. Additionally, the neural network is configured to determine a second encoding parameter value for the second spatial region. The neural network may be configured to determine the encoding parameter values such that when the video is encoded, the first spatial region is encoded with a higher quality compared to the second spatial region. In this way, the first spatial region may be encoded with a higher visual fidelity than the second region. This may result in a reduction of the bandwidth required to stream the video, while having a higher video quality for the salient features of the video than would otherwise be provided.

In operation S130, the system is configured to encode the video including the first and second regions, where the first and second regions are encoded in accordance with the respectively determined first and second encoding parameter values.

In operation S140, user feedback data relating to salient regions may be input to the system. The feedback may include, but is not limited to: gaze information with timestamp to indicate the time of the video corresponding to the gaze information, emotional and/or biometric data, or an interaction output. The user feedback data is input to a quality matching scorer. The user feedback data may, for example, indicate which spatial regions the user considers to be a salient region of the video.

In operation S150, the quality matching scorer is configured to analyse the encoding information of the encoded video together with the user feedback data. The encoding information may be provided in the form of an encoding parameter matrix. The encoding parameter matrix comprises two or more elements corresponding to at least the first and second encoding parameter values determined by the neural network. Alternatively, the encoding information may be extracted from the video data, for example from video metadata.

The quality matching scorer checks whether the quality of the region which the user considers to be a salient region of the video is high compared to other regions of the video.

This can be done by computing a quality measure such as a PSNR (peak signal to noise ratio) or any other suitable measure. The spatial extent of the region under analysis may be a predetermined extent defined by the designer of the system. Alternatively, the spatial extent of the region under analysis may adapt based on the user feedback data, for example, by taking into account the temporal gaze pattern and related statistics such as the variance or standard deviation of the region of the video corresponding to the gaze direction, or the average area watched by most users from which data is collected.

If the feedback data is taken from emotional or biometric data, such as sudden fear, surprise or excitement, the PSNR needs to be high enough for a temporal extent which covers the temporal extent of the emotion or emotion change. This may also be extended to a pre-emotion phase and post-emotion phase. In some embodiments, the emotional or biometric feedback data may be taken into account when determining the size of the salient region. For example, during a predicted salient time interval, the salient region(s) may be extended such that a wider salient region with better quality is provided during the salient time interval. Such salient temporal extents can be also configured to be determined based on the audio content, for example based on detecting a temporal increase in volume level.

The quality matching scorer outputs a score which represents how well the neural network has identified the salient regions in the latest training iteration. The quality match score indicates the correspondence between the first spatial regions and the salient features indicated by the user feedback data. The score may be determined, for example, based on a gaze direction and the encoding information of a spatial region of the video corresponding to the at least one gaze direction. The score may be represented for example by a real number, as described earlier.

In operation S160, the determined quality match score is input to the neural network. The quality match score updates the weights of the neural network. For example, the quality matching scorer may compute a gradient of the loss via back-propagation, and perform an update step to update the neural network. Based on the quality match score, the neural network can be further trained to improve the detection of salient features. Accordingly, the visual experience for the user can be improved, by improving the detection of salient features in order to encode the regions including salient features at a higher visual fidelity.

The neural network may continuously analyse video (and audio) data being input to the system. The user feedback data may be provided in a feedback loop, such that at step 110, the neural network determines salient regions of the input video and corresponding encoding parameter values based on the user feedback provided in the form of the quality match score.

If the feedback loop is broken, then the neural network determines encoding parameter values based on the latest training data.

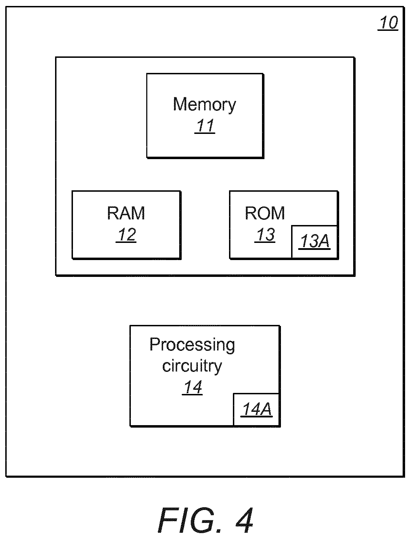

Figure 4 is a schematic block diagram of an example configuration of a video encoding system such as that described with reference to Figures 1 to 3. The encoding system may comprise memory and processing circuitry. The memory 11 may comprise any combination of different types of memory. In the example of Figure 4, the memory comprises one or more read-only memory (ROM) media 13 and one or more random access memory (RAM) memory media 12. The processing circuitry 14 may be configured to process an input video and user feedback as described with reference to Figures 1 to 3.

The memory described with reference to Figure 4 may have computer readable instructions stored thereon 13A, which when executed by the processing circuitry 14 causes the processing circuitry 14 to cause performance of various ones of the operations described above. The processing circuitry 14 described above with reference to Figure 4 may be of any suitable composition and may include one or more processors 14A of any suitable type or suitable combination of types. For example, the processing circuitry 14 may be a programmable processor that interprets computer program instructions and processes data. The processing circuitry 14 may include plural programmable processors. Alternatively, the processing circuitry 14 may be, for example, programmable hardware with embedded firmware. The processing circuitry 14 may be termed processing means. The processing circuitry 14 may alternatively or additionally include one or more Application Specific Integrated Circuits (ASICs). In some instances, processing circuitry 14 may be referred to as computing apparatus.

The processing circuitry 14 described with reference to Figure 4 is coupled to the memory 11 (or one or more storage devices) and is operable to read/write data to/from the memory. The memory may comprise a single memory unit or a plurality of memory units 13 upon which the computer readable instructions 13A (or code) is stored. For example, the memory 11 may comprise both volatile memory 12 and non-volatile memory 13. For example, the computer readable instructions 13A may be stored in the non-volatile memory 13 and may be executed by the processing circuitry 14 using the volatile memory 12 for temporary storage of data or data and instructions. Examples of volatile memory include RAM, DRAM, and SDRAM etc. Examples of non-volatile memory include ROM, PROM, EEPROM, flash memory, optical storage, magnetic storage, etc. The memories 11 in general may be referred to as non-transitory computer readable memory media.

The term 'memory', in addition to covering memory comprising both non-volatile memory and volatile memory, may also cover one or more volatile memories only, one or more non-volatile memories only, or one or more volatile memories and one or more non-volatile memories.

The computer readable instructions 13A described herein with reference to Figure 4 may be pre-programmed into the video encoding system. Alternatively, the computer readable instructions 13A may arrive at the video encoding system via an electromagnetic carrier signal or may be copied from a physical entity such as a computer program product, a memory device or a record medium such as a CD-ROM or DVD. The computer readable instructions 13A may provide the logic and routines that enable the v to perform the functionalities described above. For example, the AI controller 10, encoder 20, and QMS 30 may be implemented as computer readable instructions stored on one or more memories, which, when executed by the processor circuitry, cause processing input data according to embodiments of the specification. The combination of computer-readable instructions stored on memory (of any of the types described above) may be referred to as a computer program or a computer program product.

As will be appreciated, the video encoding system described herein may include various hardware components which have may not been shown in the Figures since they may not have direct interaction with the shown features.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specific circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term 'circuitry' refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile device or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

If desired, the different functions discussed herein may be performed in a different order and/or concurrently with each other. Furthermore, if desired, one or more of the above-described functions may be optional or may be combined. Similarly, it will also be appreciated that the flow diagram of Figure 3 is an example only and that various operations depicted therein may be omitted, reordered and/or combined.

Although various aspects are set out in the independent claims, other aspects comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the appended claims.

## Claims

1. A method comprising:
determining, by a neural network, a first spatial region of a video as a salient region;
determining, by the neural network, at least one first encoding parameter value for the first spatial region and at least one second encoding parameter value for a second spatial region of the video;
encoding the first and second spatial regions in accordance with the first and second encoding parameter values;
receiving user feedback data associated with one or more users viewing the video having the first and second spatial regions encoded in accordance with the first and second encoding parameter values, the user feedback data indicating a salient region of the video; and
determining a quality score indicating correspondence between the first spatial region and the salient region indicated by the user feedback data.

2. A method according to claim 1, further comprising:
determining, by the neural network, a context of the video; and
determining the first and second encoding parameter values based on the determined context.

3. A method according to claim 2, wherein determining the context of the video comprises identifying a pattern or feature of the video relating to the context.

4. A method according to any preceding claim, wherein the first and second encoding parameter values are represented in a encoding parameter matrix, wherein the encoding parameter matrix comprises two or more elements corresponding to at least the first and second encoding parameter values determined by the neural network.

5. A method according to any preceding claim, further comprising:
wherein determining the quality score is based on encoding information of the first and second spatial regions and the user feedback data.

6. A method according to claim 5, further comprising:
providing the quality score to the neural network; and
determining, by the neural network, the first spatial region and the first and second encoding parameter values based on the quality score.

7. A method according to claim 6, wherein the user feedback data comprises data relating to at least one gaze direction from one or more users viewing the video, and wherein the quality score is determined based on the at least one gaze direction and the encoding information of a spatial region of the video corresponding to the at least one gaze direction.

8. A method according to claim 6, wherein the user feedback data comprises at least one interaction from the one or more users indicating the salient region, and the quality score is determined based on the at least one interaction and the encoding information of a spatial region of the video corresponding to the salient region indicated by the user.

9. A method according to any of claims 4 to 8, wherein the encoding information is provided by the encoding parameter matrix.

10. A method according to any of claims 4 to 9, wherein the encoding information is extracted from the video.

11. A method according to any preceding claim, further comprising determining the first and second encoding parameter values such that the first spatial region is encoded with a higher visual saliency than the second spatial region.

12. Apparatus comprising means for:
determining, by a neural network, a first spatial region of a video as a salient region;
determining, by the neural network, at least one first encoding parameter value for the first spatial region and at least one second encoding parameter value for a second spatial region of the video;
encoding the first and second spatial regions in accordance with the first and second encoding parameter values
receiving user feedback data associated with one or more users viewing the video having the first and second spatial regions encoded in accordance with the first and second encoding parameter values, the user feedback data indicating a salient region of the video; and
determining a quality score indicating correspondence between the first spatial region and the salient region indicated by the user feedback data.

13. The apparatus of claim 12, further comprising means for performing the method of any of claims 2 to 11.
